# EUROPÄISCHE PATENTSCHRIFT

(11) **EP 1 576 913 B1**
(45) Veröffentlichungstag und Bekanntmachung des Hinweises auf die Patenterteilung: **04.06.2008**
(21) Anmeldenummer: 04006721.7
(22) Anmeldetag: 19.03.2004
(51) Int. Cl.: A47J 36/24

(54) **Elektrisches Wärmegerät mit Stromsensor**
Electric heater with current sensor
Chauffage électrique avec détecteur de courant

(43) Veröffentlichungstag der Anmeldung: 21.09.2005
(73) Patentinhaber: DBK David + Baader GmbH, 76870 Kandel (DE)
(72) Erfinder: Bauer, Hans-Peter, 76889 Klingenmüster (DE)
(74) Vertreter: Grünecker, Kinkeldey, Stockmair & Schwanhäusser Anwaltssozietät

(56) Entgegenhaltungen:
- FR-A- 1 513 453
- US-A- 3 187 164
- US-A- 3 584 196
- US-A- 4 759 189
- US-A- 5 773 795
- US-B1- 6 222 989
- US-B2- 6 661 967

## Beschreibung

Die vorliegende Erfindung bezieht sich auf ein elektrisches Wärmegerät zum Erwärmen eines Behälters mittels eines Wärmeübertragungsmediums. Das Wärmegerät weist einen Becher in den der Behälter zum Erwärmen einsetzbar ist und eine elektrische Heizvorrichtung mit mindestens einem Widerstandsheizelement zum Erwärmen des Wärmeübertragungsmediums auf.

Das Verdampfen von Wasser in einem elektrischen Wärmegerät wird in sogenannten Vaporisatoren, d. h. in Sterilisiergeräten, beispielsweise für Babyflaschen, benötigt. Die Überwachung und Steuerung der Leistungszufuhr bei diesen Geräten erfolgt dabei meist über eine Temperaturüberwachung, wie dies beispielsweise in der US 4,716,278 gezeigt ist. Dabei kann aber unnötig Heizleistung zugeführt werden, falls noch geheizt wird, wenn bereits alles Wasser verdampft ist.

Eine weitere bekannte Anordnung eines Sterilisators ist in der US 3,347,618 gezeigt. Bei diesem Sterilisator erfolgt die Abschaltung der Heizleistung unmittelbar nach dem Verdampfen des gesamten Wasservorrates deshalb, weil die Heizung über offene Elektroden erfolgt und ein Stromfluss direkt durch das eingefüllte Wasser auftritt. Diese Lösung hat jedoch deutliche Nachteile in sicherheitstechnischer Hinsicht.

Derartige elektrische Wärmegeräte werden weiterhin häufig zum Erwärmen von in einem Behälter befindliche Babykost eingesetzt. Dabei ist es neben der Erwärmung der Babykost im Wasserbad auch bekannt, Babykost mittels Wasserdampf als Wärmeübertragungsmedium zu erwärmen. Ein elektrischer Babykostwärmer mit Wasserdampf ist beispielsweise aus der DE 102 14 905 C1 bekannt. Der Vorteil dieser Lösung besteht darin, dass nur eine sehr geringe Wassermenge verdampft werden muss und aufgrund der hohen Temperatur und Verdampfungsenthalpie des Wasserdampfes ein sehr energiesparendes und schnelles Erwärmen der Babynahrung erfolgen kann. Nach Unterbrechen der Heizleistungszufuhr kühlt die geringe Wassermenge vergleichsweise rasch unter den Siedepunkt ab und es tritt keine weitere Wärmeübertragung an den Nahrungsbehälter mehr auf. Demzufolge kann eine Überhitzung der zu erwärmenden Babykost vermieden werden. Bei den bekannten Babykostwärmem der genannten Art erfolgt die Leistungssteuerung jedoch über einen Timer, der ein Abschalten der Leistungszufuhr nach Erreichen einer einstellbaren Heizzeit durchführt. Der Timer hat dabei die Funktion, eine definierte Temperatur der zu erwärmenden Nahrung auch bei variierenden Nahrungsmengen und Nahrungstemperaturen sicher zu stellen, benötigt aber für eine einwandfreie Funktion stets dieselbe Flüssigkeitsmenge. Dies ist im Falle vergleichsweise geringer Volumina schwierig, da kleine Wassermengen (beispielsweise 10 ml bis 20 ml) mit haushaltsüblichen Messverfahren meist nicht mit ausreichender Genauigkeit abgefüllt werden können. Daher stellt ein solcher Timer eine besonders einfach zu bedienende und kostengünstige Lösung der Leistungssteuerung dar.

Wird alternativ bei den genannten Wärmegeräten ein Thermostat zur Regelung der Heizleistungszufuhr eingesetzt, so besteht der Nachteil in der erheblichen Komplexität der Ansteuerung und Temperaturmessung.

Die FR-A-1 513 453 offenbart eine elektrische Heizeinrichtung, die einen Thermistor mit einem positiven Temperaturkoeffizienten des elektrischen Widerstandes umfasst. Weiterhin umfasst die in dieser Druckschrift gezeigte Anordnung eine Steuer- oder Regeleinrichtung, die aber im Unterschied zu der vorliegenden Erfindung die Heizvorrichtung als integralen Bestandteil für ihr Regelverhalten beinhaltet. Dabei handelt es sich um Bauelemente, die zusammen mit dem PTC-Heizelement den charakteristischen Regelkreis bilden.

Die US-A-3 187 164 bezieht sich auf eine Vorrichtung zum Schutz eines elektrischen Geräts. Dabei wird zum Schutz des elektrischen Geräts gegen thermische Überlastung ein mit dem zu schützenden Gegenstand thermisch gekoppelter Widerstand mit positivem Temperaturkoeffizienten in Reihe in den Speisekreis des elektrischen Geräts geschaltet. Der PTC-Widerstand hat einen derart hohen Temperaturkoeffizienten und steht derart in Wärmekontakt mit dem zu schützenden Gegenstand, dass bei Erreichen des kritischen Temperaturwerts der Arbeitsstrom der Vorrichtung sich auf den negativ geneigten Teil der Stromspannungskennlinie des PTC-Widerstands verlagert.

Die US-A-3 584 196 bezieht sich auf einen Kochtopf, bei dem die Heizvorrichtung einen PTC-Widerstand und einen metallischen Heizwiderstand, die in Serie geschaltet sind, aufweist. Weiterhin ist eine bimetallische Scheibe vorgesehen, die bei Raumtemperatur konvex ist und oberhalb einer bestimmten Temperatur konkav wird und dadurch den Kochtopf anhebt. Das Anheben des Kochtopfes schwächt die Wärmekopplung zwischen dem Kochtopf und dem PTC-Widerstand und erhöht die Temperatur des PTC-Widerstands. Infolgedessen steigt der Wert des Widerstandes an, um den durch die Heizeinheit fließenden Strom zu verringern. Nach dem Reduzieren des Stroms wird eine geringe, hauptsächlich vom PTC-Widerstand entwickelte elektrische Leistung zum Wärmen der schon gekochten Nahrung verwendet.

Die US-B1-6 661 967 zeigt eine Heizvorrichtung für eine Verdampfungsvorrichtung, die beispielsweise Raumluft mit verdampften Duftstoffen versetzen kann. Die Heizvorrichtung, die in dieser Druckschrift offenbart ist, umfasst einen Heizwiderstand mit einem Widerstandswert von 10 kΩ und zwei unterschiedliche Vorwiderstände, die von einem Benutzer wahlweise mit Hilfe eines Schalters in den Stromkreis geschaltet werden können. Dabei wird die Entscheidung, welcher Widerstand verwendet werden soll, von dem Benutzer getroffen.

Die US-A-4 759 189 bezieht sich auf einen selbstbegrenzenden elektrothermischen Aktuator, der eine mechanische Bewegung mit Hilfe verschiedener Heizelemente, insbesondere einem Widerstandsheizelement und einem PTC-Heizelement, erzeugt. Bei dieser Schaltung wird keine zusätzliche Steuerung zum Erfassen des Stroms durch das PTC-Element verwendet, sondern die Serienschaltung aus dem Widerstandsheizelement und dem PTC-Heizelement dient an sich als Regelkreis. Die Lastungszufuhr bleibt aber solange bestehen, wie der Kolben betätigt werden soll. Mit dem Stromfluss durch das Heizelement hat die Leistungszufuhr nichts zu tun.

Die US-B1-6 222 989 bezieht sich auf eine Heizvorrichtung zum Vernebeln von Chemikalien, bei dem eine Serienschaltung aus einem PTC-Heizelement und einem Widerstandsheizelement dazu genutzt wird, den Strom durch die Anordnung zu begrenzen und dadurch die Temperatur konstant zu halten.

Die Aufgabe, die der vorliegenden Erfindung zugrunde liegt, besteht daher darin, ein verbessertes elektrisches Wärmegerät der eingangs genannten Gattung anzugeben, bei dem die Leistungszufuhr in besonders effizienter Weise bei gleichzeitig besonders kostengünstiger Gestaltung der Steuerung durchgeführt werden kann.

Diese Aufgabe wird erfindungsgemäß durch eine elektrische Heizvorrichtung mit den Merkmalen des Patentanspruchs 1 gelöst.

Vorteilhafte Weiterbildungen der vorliegenden Erfindung sind Gegenstand mehrerer Unteransprüche.

Der vorliegenden Erfindung liegt die Erkenntnis zugrunde, dass bei einem gattungsgemäßen elektrischen Wärmegerät der Stromfluss durch das Widerstandselement von dem Aggregatzustand des mit dem Widerstandsheizelement in direktem thermischem Kontakt stehenden Wärmeübertragungsmediums beeinflusst wird. Sieht man ein Sensorelement zum Messen des Stroms, der bei Betrieb der Heizvorrichtung durch das Widerstandsheizelement fließt, vor, kann dieser Strom dazu verwendet werden, festzustellen, wann das Wärmeübertragungsmedium in die Dampfphase übergegangen ist und wann daher ein Abschalten der Leistungszufuhr erfolgen kann. Insbesondere im Falle eines Sterilisiergeräts kann dabei genau der Zeitpunkt festgestellt werden, ab dem das Sterilisiergut tatsächlich von der gewünschten Wasserdampfmenge umgeben ist. Die erfindungsgemäße Lösung bietet den Vorteil, dass die elektrische Leistungszufuhr in Abhängigkeit von dem gemessenen Strom sofort unterbrochen werden kann, wenn die beabsichtigte Aggregatszustandsänderung zur Gänze eingetreten ist und daher Energie und Zeit gespart werden können.

Gemäß einer vorteilhaften Weiterbildung der vorliegenden Erfindung wird als Widerstandsheizelement ein Widerstand mit positivem Temperaturkoeffizienten, ein sogenannter PTC-Widerstand, eingesetzt. Derartige PTC-Widerstände bieten den Vorteil, dass bei niedrigen Temperaturen eine hohe Anfangsleistung eingespeist werden kann und mit zunehmender Temperatur ein selbstregelndes Leistungsverhalten auftritt. Ein PTC-Widerstand umfasst beispielsweise eine PTC-Keramik, die aus dotierter polykristalliner Keramik auf der Basis von Bariumtitanat im Sinterverfahren gefertigt wird. Im Bereich einer für den jeweiligen Baustein vordimensionierten Bezugstemperatur, der sogenannten Regeltemperatur, wechselt der Widerstandswert des PTC-Widerstands von einem nieder- zu einem hochohmigen Verhalten und steigt dabei sprunghaft um mehrere Zehnerpotenzen an. Daher kann bei entsprechender Wahl der Bezugstemperatur der Übergang des Wärmeübertragungsmediums in die Dampfphase die Temperatur an dem PTC-Widerstand über die Regeltemperatur anheben, so dass die Änderung des Aggregatszustands zu einem sprunghaften Absinken des Stroms durch den PTC-Widerstand führt. Erfindungsgemäß misst der Stromsensor als charakteristische Stromänderung daher ein sprunghaftes Absinken des Stroms.

In vorteilhafter Weise kann der Informationsgehalt des durch das Widerstandsheizelement fließenden Stroms für eine Leistungssteuerung ausgenützt werden, wenn die Steuereinheit des elektrischen Wärmegeräts einen Vergleicher aufweist, der den gemessenen Strom mit einem Referenzwert vergleicht. Das Erreichen dieses Referenzwerts kann dann als Signal für eine Leistungsabschaltung genutzt werden. Im Falle einer erforderlichen länger dauernden Beheizung, wie dies bei Sterilisiergeräten der Fall sein kann, ist es auch möglich, zu detektieren, wann das kondensierende Wärmeübertragungsmedium sich in unzulässig hohem Ausmaß wieder niedergeschlagen hat, indem beispielsweise das Widerstandsheizelement kurzzeitig bestromt wird und der hindurchfließende Strom durch die Steuereinheit überwacht wird.

Mittels einer Zeitreferenz kann weiterhin bestimmt werden, ob eine zu geringe Menge des Wärmeübertragungsmediums eingefüllt wurde und der Benutzer kann entsprechend gewarnt werden, dass der Heizprozess nicht wie vorgesehen durchlaufen wurde.

Weiterhin kann auch die Dynamik des Stroms durch das Widerstandsheizelement überwacht werden. Dabei kann mittels einer Differentiation des gemessenen Stromwertes durch einen in der Steuerung vorgesehenen Differenzierer das plötzliche Absinken des Stromes erfasst werden. Diese Lösung bietet den Vorteil einer verkürzten Detektionszeit sowie einer geringeren Empfindlichkeit gegenüber kurzzeitigen Stromänderungen infolge von Toleranzen, Temperatureinflüssen oder Spannungsänderungen. Allerdings sollte bei dieser Ausführungsform sichergestellt werden, dass entweder das Absinken des Stromes nach dem Einschaltstrompeak ausgeblendet wird, oder aber die PTC-Heizung so dimensioniert ist, dass sie einen ausreichend geringen Einschaltstrom aufweist.

Eine Überwachung des Stroms durch das Widerstandsheizelement in einem gattungsgemäßen elektrischen Wärmegerät bietet außerdem den Vorteil, dass auftretende Fehler in der elektrischen Kontaktierung frühzeitig erkannt werden können.

Die erfindungsgemäße Detektierung und Überwachung des Stroms durch ein Widerstandsheizelement, das mit einem zu erwärmenden Medium in thermischem Kontakt steht, kann selbstverständlich auch auf anderen Anwendungsgebieten dazu eingesetzt werden, den Aggregatzustand eines zu erwärmenden Mediums zu überwachen und eine Heizleistung entsprechend dem sensierten Aggregatzustand einzustellen.

Anhand der in den beiliegenden Zeichnungen dargestellten Ausgestaltungen wird die Erfindung im Folgenden näher erläutert. Ähnliche oder korrespondierende Einzelheiten sind in den Figuren mit denselben Bezugszeichen versehen. Es zeigen:
- Fig. 1: einen Schnitt durch ein elektrisches Sterilisiergerät mit eingestelltem Behälter im betriebsbereiten Zustand;
- Fig. 2: einen Schnitt durch einen elektrischen Babykostwärmer mit eingestellter Babyflasche im betriebsbereiten Zustand;
- Fig. 3: eine Darstellung des Zeitverlaufs des Stroms durch ein PTC-Widerstandsheizelement;
- Fig. 4: eine schematische Darstellung der elektrischen Heizvorrichtung für ein erfindungsgemäßes elektrisches Wärmegerät gemäß einer möglichen Ausführungsform.

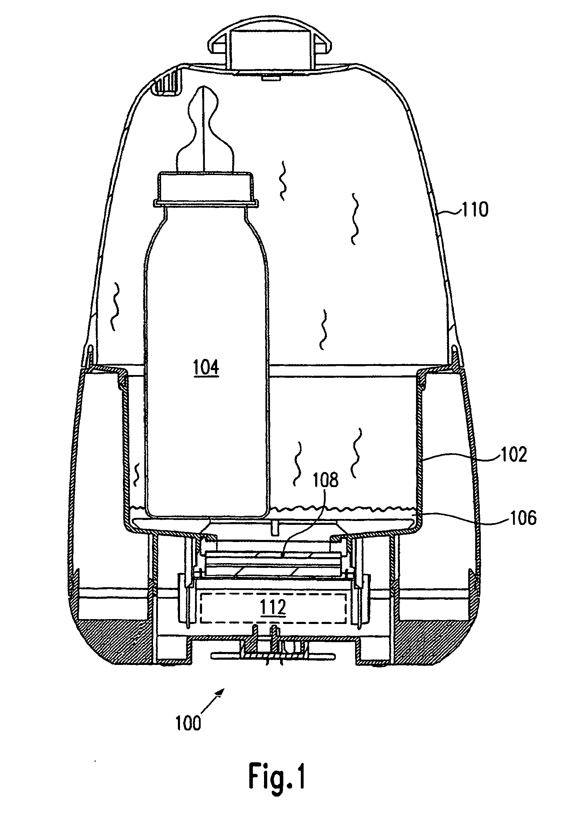

Fig. 1 zeigt in einer schematischen Darstellung ein elektrisches Sterilisiergerät 100 mit einer eingestellten Babyflasche im betriebsbereiten Zustand. Das elektrische Wärmegerät weist dabei einen Becher 102 auf, in den der zu erwärmende Behälter 104, hier beispielshalber eine Babyflasche, eingesetzt werden kann. Der Becher 102 wird mit dem Wärmeübertragungsmedium 106, hier Wasser, befüllt und ein PTC-Widerstandsheizelement 108, das mit dem Wasser 106 in thermischer Verbindung steht, kann zum Aufheizen des Wassers mit elektrischer Energie versorgt werden. Wenn das PTC-Widerstandsheizelement 108 beheizt wird, erwärmt sich das Wasser 106 und beginnt zu verdampfen.

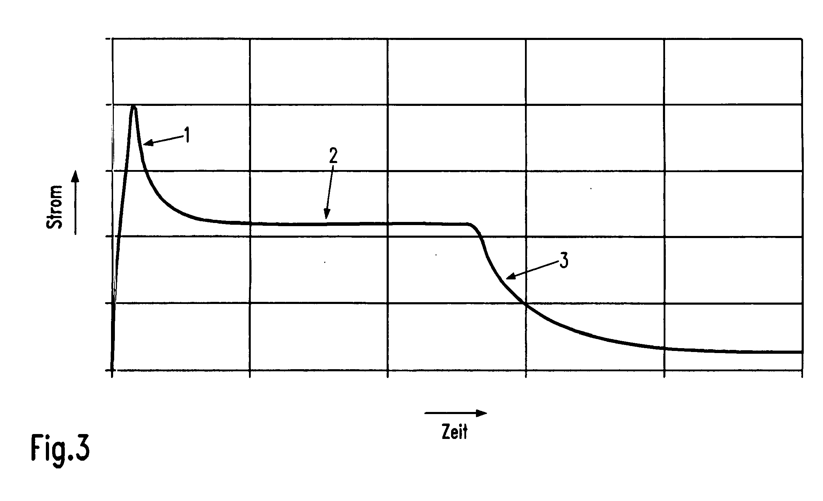

Um eine geschlossene Dampfatmosphäre zum Sterilisieren des Behälters 104 zu erzeugen, wird der Becher mit einer Abdeckung 110 geschlossen. Die Leistungszufuhr wird mit Hilfe der schematisch angedeuteten Steuereinheit 112 geregelt. Dabei tritt, wie im Folgenden mit Bezug auf Fig. 3 noch genauer erläutert werden soll, in dem zeitlichen Verlauf des Stroms durch das PTC-Widerstandsheizelement 108 ein sprunghaftes Absinken auf, wenn das gesamte Wasser 106 in die Dampfphase übergegangen ist.

Für die meisten Anwendungsfälle ist es ausreichend, die Leistungszufuhr einzustellen, sobald das gesamte Wasser verdampft ist, weil sich der Dampf in dem geschlossenen Dampfraum, der durch den Becher 102 und die Abdeckung 110 gebildet ist, ausreichend lange auf dem gewünschten hohen Temperaturniveau hält.

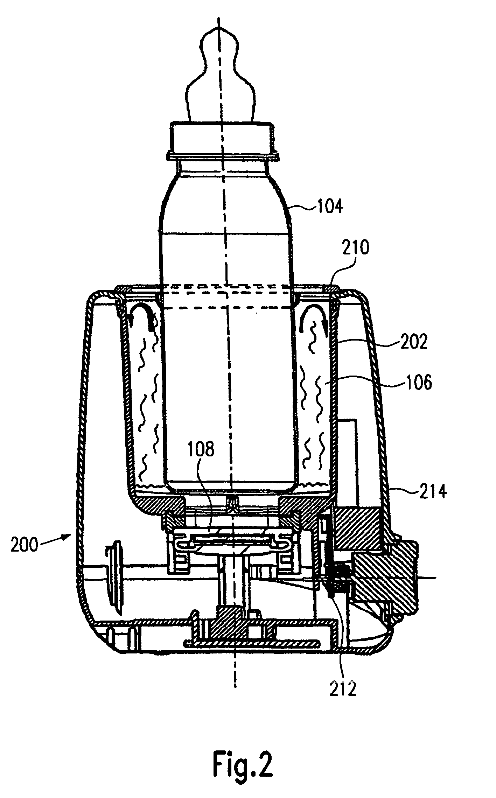

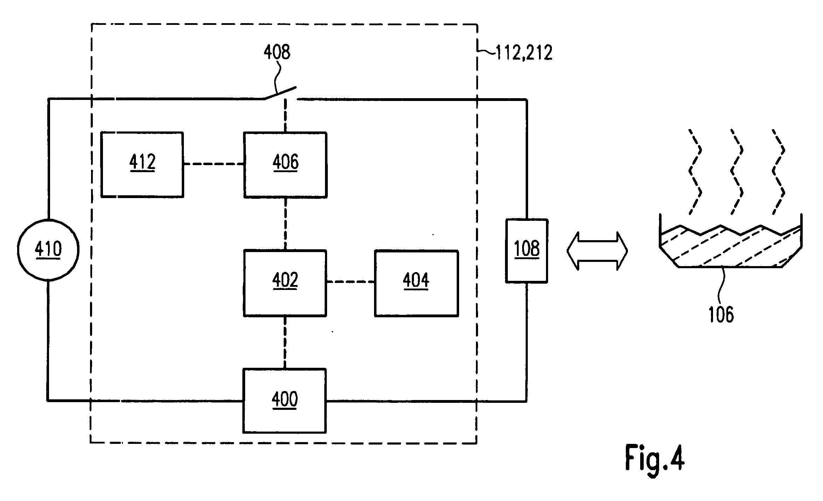

Eine weitere mögliche Ausführungsform des erfindungsgemäßen elektrischen Wärmegeräts ist in der Fig. 2 dargestellt. Wie aus der Fig. 2 ersichtlich, weist der Babykostwärmer 200 einen Becher 202 auf, in den ein Behälter 104 zum Erwärmen von Babykost, hier eine Babysaugflasche, eingesetzt ist. Das PTC-Widerstandsheizelement 108 steht so mit dem Wärmeübertragungsmedium 106, hier wiederum Wasser, in Verbindung, dass es bei elektrischer Leistungszufuhr erhitzt wird. Der Becher 202, das PTC-Widerstandsheizelement 108 sowie die Steuereinheit 212 sind in dem vorzugsweise aus Kunststoff gefertigten Gehäuse 214 untergebracht. Der in Fig. 2 gezeigte Babykostwärmer 200 weist weiterhin eine Abdeckung 210 auf, die in der gezeigten Ausführungsform eine ringförmige Gestalt hat und den Zwischenraum zwischen dem Becher 202 und dem Behälter 104 so gegenüber der Umgebung abdeckt, dass eine im Wesentlichen geschlossene Kammer zum Zurückhalten des Wasserdampfes entsteht. Um den Inhalt der Babyflasche 104 zu erwärmen, wird vor dem Anbringen der Abdeckung 210 und dem Einstellen der Babyflasche 104 eine geringe Menge Wasser eingefüllt. Nach dem Aufsetzen der Abdeckung und dem Einbringen der Babyflasche 104 kann elektrische Leistung über das PTC-Widerstandsheizelement 108 zugeführt werden und das im Bodenbereich des Bechers 202 befindliche Wasser 106 beginnt rasch zu sieden und in Wasserdampf überzugehen. Der durch die Abdeckung 210, die Becherinnenwände und die Außerwände der Babyflasche 104 gebildete Hohlraum füllt sich auf diese Weise mit Wasserdampf unter Atmosphärendruck. Da Wasser sehr gute Wärmeübertragungseigenschaften hat, wird die in dem Wasserdampf gespeicherte Energie zu einem Großteil an die Babyflasche 104 abgegeben und die darin befindliche Babynahrung wird erwärmt. Erfindungsgemäß kann die elektrische Leistungszufuhr bereits dann abgeschaltet werden, wenn das gesamte Wasser 106 in Wasserdampf übergeführt ist. Hierzu wird, wie im Folgenden mit Bezug auf die Fig. 3 und 4 noch im Detail erläutert werden soll, der Strom, der durch das PTC-Widerstandsheizelement 108 fließt, überwacht und die Heizleistung wird abgeschaltet, sobald dieser Strom angibt, dass das gesamte Wasser in Wasserdampf übergegangen ist.

Obwohl in den Fig. 1 und 2 als Behälter 104 eine handelsübliche Babysaugflasche gezeigt ist, kann selbstverständlich ein beliebiger anderer Behälter 104 in die elektrischen Wärmegeräte 100, 200 eingesetzt werden.

Mit Bezug auf Fig. 3 soll im Folgenden der Grundgedanke der erfindungsgemäßen Lösung einer Stromüberwachung eines Widerstandsheizelements 108 genauer erläutert werden. In Fig. 3 ist der Zeitverlauf des Stroms durch ein PTC-Heizelement gezeigt, das mit Wasser in Kontakt steht. Nach dem Einschalten ist zunächst eine Spannungsspitze 1 erkennbar, der Einschaltstrom, der fließt, bis ein thermisch stationärer Zustand erreicht ist und der minimale Widerstand Rₘᵢₙ des PTC-Widerstandsheizelements durchschritten ist. Anschließend ist (durch die Bezugsziffer 2 symbolisiert) ein thermisch stationärer Zustand erreicht, währenddessen das Wasser siedet und zunehmend in die Dampfphase übergeht. Dieser stationäre Zustand spiegelt sich in einem konstanten Stromfluss durch das PTC-Heizelement wider. In dem Augenblick, in dem das gesamte Wasser verdampft ist, steigt die Temperatur über der Heizung an und aufgrund des einsetzenden PTC-Effekts sinkt die Leistungsaufnahme, und damit der Stromfluss durch das PTC-Heizelement exponentiell ab. Bei geeigneter Auslegung des Heizelements kann das durch die Bezugsziffer 3 dargestellte sprunghafte Absinken des Stroms als Information über die gesamte Umwandlung des Wassers in den dampfförmigen Aggregatzustand genutzt werden.

Wie in Fig. 4 gezeigt, enthält die Steuereinheit 112, 212 einen Stromsensor 400, der mit dem Heizelement 108 in Serie geschaltet ist. Das Heizelement 108 ist in direktem thermischen Kontakt mit dem Wärmeübertragungsmedium 106 und weist im Betrieb einen zeitlichen Stromverlauf auf, den erfindungsgemäß ein Stromsensor 400 misst. Ein Vergleicher 402 vergleicht den gemessenen Stromwert mit einer fest einprogrammierten oder einstellbaren Referenz 404. Eine Auswertelogik 406 steuert in Abhängigkeit von dem Komparatorsignal und in Abhängigkeit von einem Startsignal einen Leistungsschalter 408. Der Leistungsschalter stellt die Verbindung einer externen Spannungsversorgung 410 zu dem Heizelement 108 her. Ein Startsignalgeber 412 kann vorgesehen sein, um die Auswertelogik 406 zu starten.

Mit Hilfe der erfindungsgemäßen Stromüberwachung ist es möglich, unmittelbar nach dem Übergang des Aggregatzustands die zugeführte Heizleistung abzuschalten und so unnötigen Energieverbrauch einzuschränken.

Obwohl die vorliegende Erfindung im Zusammenhang mit Sterilisatoren und Babykostwärmem erläutert wurde, kann sie selbstverständlich auch für andere Heizanwendungen verwendet werden, bei denen eine Umwandlung eines Aggregatzustands, beispielsweise ein Verdampfen von Wasser, auftritt. Weiterhin muss es sich bei dem Heizelement nicht um ein PTC-Widerstandsheizelement handeln. Auch andere Widerstandsheizelemente zeigen charakteristische Stromverläufe, die eine Information über einen Phasenübergang in dem zu beheizenden Medium enthalten.

## Patentansprüche

1. Elektrische Heizvorrichtung mit einem Widerstandsheizelement (108), das einen temperaturabhängigen Widerstand aufweist und mit einem zu erwärmenden Medium (106) thermisch kontaktierbar ist,
**gekennzeichnet durch**
ein Sensorelement (400) zum Messen des Stroms, der bei Betrieb der Heizvorrichtung **durch** das Widerstandsheizelement (108) fließt, und
eine Steuereinheit (112, 212), die so ausgebildet ist, dass sie ein sprunghaftes Absinken des Stromes **durch** das Widerstandsheizelement infolge einer Änderung des Aggregatzustands des zu erwärmenden Mediums erkennt und eine Leistungszufuhr an das Widerstandsheizelement in Abhängigkeit von dem Aggregatzustand des zu erwärmenden Mediums steuert,
wobei die Steuereinheit einen Vergleicher (402) zum Vergleichen des gemessenen Stroms mit einem Referenzwert (404) aufweist und betrieben werden kann, um einem Leistungsschalter (408) in Antwort auf ein Ausgangssignal des Vergleichers (402) zu betätigen.

2. Elektrische Heizvorrichtung nach Anspruch 1, **dadurch gekennzeichnet, dass** das Widerstandsheizelement (108) durch mindestens einen Widerstand mit positivem Temperaturkoeffizienten gebildet ist.

3. Elektrische Heizvorrichtung nach einem der Ansprüche 1 oder 2, **dadurch gekennzeichnet, dass** die Steuereinheit einen Differenzierer zum Ermitteln einer Steigung des zeitlichen Stromverlaufs aufweist.

4. Elektrisches Wärmegerät zum Erwärmen eines Behälters (104) mittels eines Wärmeübertragungsmediums (106), wobei das Wärmegerät (100, 200) einen Becher (102, 202), in den der Behälter zum Erwärmen einsetzbar ist, und eine elektrische Heizvorrichtung nach mindestens einem der vorhergehenden Ansprüche mit mindestens einem Widerstandsheizelement (108) zum Erwärmen des Wärmeübertragungsmediums aufweist.

5. Elektrisches Wärmegerät nach Anspruch 6, **dadurch gekennzeichnet, dass** das Wärmeübertragungsmedium (106) Wasser ist und die charakteristische Stromänderung durch den Übergang des Wassers in die Dampfphase bedingt ist.

6. Elektrisches Wärmegerät nach Anspruch 5, **dadurch gekennzeichnet, dass** der Becher (102, 202) zusammen mit einer Abdeckung (110, 210) einen im wesentlichen geschlossenen Raum zum Zurückhalten des dampfförmigen Wärmeübertragungsmediums (106) bildet.

## Claims

1. Electric heating device with a resistance heating element (108) that comprises a temperature dependent resistance and can be thermally contacted with a medium to be warmed (106),
**characterized by**
a sensor element (400) for measuring the current flowing through the resistance heating element (108) during operation of the heating device and
a control unit (112, 212) which is adapted for detecting an abrupt decrease of the current through the resistance heating element due to a change in the state of aggregation of the medium to be heated, and for controlling power supply to the resistance heating element in response to the state of aggregation of the medium to be heated,
wherein the control unit comprises a comparator (402) for comparing the measured current for the reference value (404) and can be operated to actuate a power switch (408) in response to an output signal of the comparator (402).

2. Electric heating device according to claim 1, **characterized in that** the resistance heating element (108) is formed by at least one resistor having a positive temperature coefficient.

3. Electric heating device according to one of claims 1 or 2, **characterized in that** the control unit comprises a differentiator for determining a rise in the current curve over time.

4. Electric warming device for heating a container (104) by means of a heat transfer medium (106), wherein the warming device (100, 200) comprises a jar (102, 202) into which the container can be inserted for heating, and an electric heating device according to at least one of the preceding claims, having at least one resistance heating element (108) for heating the heat transfer medium.

5. Electric warming device according to claim 6, **characterized in that** the heat transfer medium (106) is water and that the characteristic current change is caused by the transition of water into the vapor phase.

6. Electric warming device according to claim 5, **characterized in that** the jar (102, 202) forms together with a cover (110, 210) a substantially closed chamber for retaining the vaporous heat transfer medium (106).

## Revendications

1. Dispositif de chauffage électrique avec un élément de chauffage résistif (108), qui comporte une résistance dépendant de la température et qui peut être mis en contact thermique avec un fluide (106) à chauffer,
**caractérisé par**
un élément détecteur (400) destiné à mesurer le courant, qui circule à travers l'élément de chauffage résistif (108) en cours de service du dispositif de chauffage, et
une unité de commande (112, 212) qui est conçue de telle sorte qu'elle détecte une baisse brusque du courant à travers l'élément de chauffage résistif à la suite d'une variation de l'état du fluide à chauffer, et commande une admission de puissance vers l'élément de chauffage résistif en fonction de l'état du fluide à chauffer,
l'unité de commande comportant un comparateur (402) destiné à comparer le courant mesuré avec une valeur de référence (404) et peut être utilisée pour actionner un disjoncteur (408) en réponse à un signal de sortie du comparateur (402).

2. Dispositif de chauffage électrique selon la revendication 1, **caractérisé en ce que** l'élément de chauffage résistif (108) est formé par au moins une résistance avec un coefficient positif de température.

3. Dispositif de chauffage électrique selon la revendication 1 ou 2, **caractérisé en ce que** l'unité de commande comporte un différenciateur destiné à déterminer un accroissement de la courbe du courant en fonction du temps.

4. Dispositif de réchauffage électrique destiné à réchauffer un récipient (104) au moyen d'un fluide caloporteur (106), le dispositif de réchauffage (100, 200) comportant un godet (102, 202) dans lequel peut être introduit le récipient à chauffer, et un dispositif de chauffage électrique selon au moins l'une des revendications précédentes, avec au moins un élément de chauffage résistif (108) pour chauffer le fluide caloporteur.

5. Dispositif de réchauffage électrique selon la revendication 6, **caractérisé en ce que** le fluide caloporteur (106) est de l'eau et la variation de courant caractéristique est due à la transformation de l'eau en phase vapeur.

6. Dispositif de réchauffage électrique selon la revendication 5, **caractérisé en ce que** le godet (102, 202), conjointement avec un cache (110, 210) forme un espace sensiblement fermé pour retenir l'agent caloporteur (106) en forme de vapeur.
